# EUROPEAN PATENT APPLICATION

(11) **EP 2 418 384 A1**
(43) Date of publication of application: **15.02.2012**
(21) Application number: 11175905.6
(22) Date of filing: 29.07.2011
(51) Int. Cl.: F03D 11/02, F16H 1/48

(54) **Gearbox support system**

(30) Priority: 11.08.2010 US 854350
(71) Applicant: General Electric Company, Schenectady, NY 12345 (US)
(72) Inventor: Longtin, Randy Scott, Niskayuna, NY New York 12309 (US)
(74) Representative: Bedford, Grant Richard

(57) **Abstract**

A rotary machine (10) including a three link support mechanism (12) is provided. The rotary machine (10) includes a rotor (16), an input shaft (18) coupled to the rotor (16), a gearbox (20) coupled to the input shaft (18), and at least one cantilevered component coupled to the gearbox (20). The rotary machine (10) further comprises a three link support mechanism (12) coupled to at least one of the gearbox (20), the at least one cantilevered component.

## Description

The invention relates generally to gearbox support systems and, in particular, to a support system for preventing misalignment of gears in a gearbox by ensuring that the downwind bearings load is within acceptable limits.

In conventional wind turbines, the gear train comprises a planetary gearbox driven by an input shaft that is rotated due to wind loads acting on a plurality of rotor blades. The gear train is used to drive an electric generator, which is generally cantilevered to the gearbox. The rotor generally provides a low speed, high torque input to the gearbox. The gearbox provides a high speed, low torque output to the generator.

The gearbox and the attached cantilevered generator may weigh many tons. The loads of the gearbox and the generator result in a load on the planetary gear train. Such loads are generally referred to as gearbox internal gear loads or simply gearbox loads. During operation of the wind turbine, the gearbox loads may be dynamic in nature. The gearbox loads causes vertical deflection of the gearbox which in turn causes gear tooth misalignment and therefore reduced gearbox life. It is therefore desirable to support the gearbox to reduce the deflection of the gearbox.

Conventionally, the gearbox is supported by an input shaft and torque arms. Torque arms connect a gearbox outer casing to a bedplate using a relatively soft elastomer interface that dampens dynamic loads. The torque arms can be placed such that a center line of the arms passes through an upwind gearbox bearing. This is because providing the torque arms further downwind generally increases the gearbox internal gear loads.

It is desirable to have suitable gearbox support mechanisms, which can support the gearbox's cantilevered loads under various extreme loading events and also against dynamic loads.

In accordance with one exemplary embodiment disclosed herein, a rotary machine including a three link support mechanism is provided. The rotary machine includes a rotor, an input shaft coupled to the rotor, a gearbox coupled to the input shaft, and at least one cantilevered component coupled to the gearbox. The rotary machine further comprises a three link support mechanism coupled to at least one of the gearbox, the at least one cantilevered component.

Various features, aspects, and advantages of the present invention will become better understood when the following detailed description is read with reference to the accompanying drawings in which like characters represent like parts throughout the drawings, wherein:
FIG. 1 shows a diagrammatical representation of a three link support mechanism coupled to a gearbox outer casing of a wind turbine in accordance with an exemplary embodiment disclosed herein;
FIG. 2 is an exploded diagrammatical representation of three links of a three link support mechanism in accordance with the embodiment of FIG 1;
FIG. 3 is a diagrammatical representation of wind loads acting on a input shaft, the forces exerted by a three link support mechanism, a generator, and a gearbox in accordance with the embodiment of FIG. 1;
FIG. 4 is a diagrammatical representation of a three link support mechanism coupled to a generator of a wind turbine in accordance with an exemplary embodiment disclosed herein; and
FIG. 5 is a diagrammatical representation of wind loads acting on a input shaft, the forces exerted by a three link support mechanism, a generator, and a gearbox in accordance with the embodiment of FIG. 4.

As discussed in detail below, various embodiments of the present invention provide a gearbox support system for a rotary machine. In one embodiment the rotary machine is a wind turbine. This invention may, however be, embodied in many different forms and should not be construed as limited to the embodiments set forth herein; rather these embodiments are provided so that this disclosure will be thorough and complete and will fully convey the scope of the invention to those skilled in the art. In an exemplary embodiment, a three link support mechanism to support the gearbox is provided.

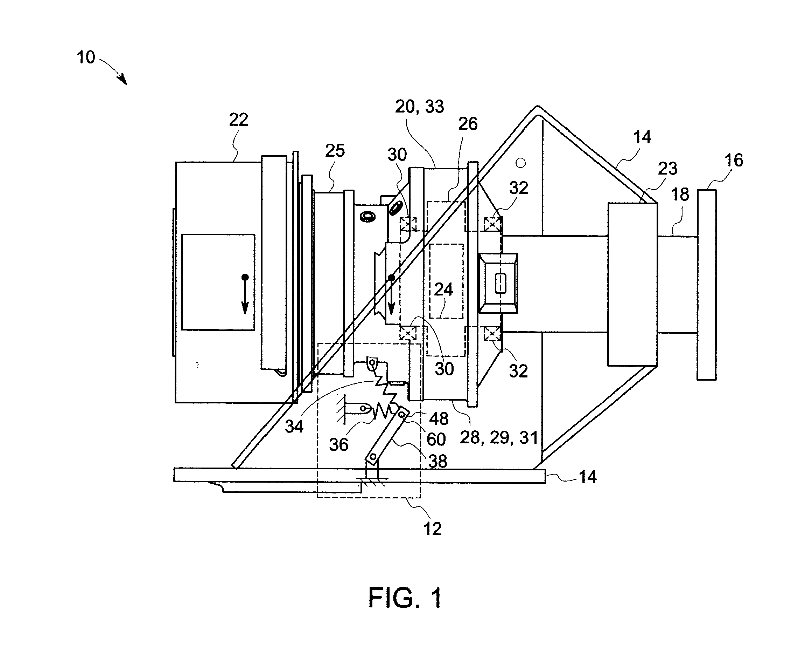

FIG.1 illustrates schematic representation of a wind turbine 10 in accordance with an exemplary embodiment of the invention. The wind turbine 10 includes a three link support mechanism 12, a bedplate 14, a rotor 16, an input shaft 18, a gearbox 20 (generally referred to as the primary gearbox), and a generator 22. The rotor 16, the input shaft 18, the gearbox 20, and the generator 22 are supported on the bedplate 14. The rotor 16 is coupled to the gearbox 20 via the input shaft 18. The input shaft 18 is supported via a plurality of main bearings 23. The gearbox 20 is coupled to the generator 22 via an output shaft (not shown). The gearbox 20 is typically used to transmit and increase the speed of the output shaft to the generator 22. The rotor 16 rotates in response to wind across the wind turbine 10. The rotary motion of the rotor 16 is transmitted through the input shaft 18, the gearbox 20, and the output shaft, to the generator 22. The generator 22 is configured to generate power.

According to an embodiment of the present invention, the gearbox 20 is connected directly to the generator 22 via fasteners or any other suitable fastening means. According to other embodiments of the invention, a secondary gearbox 25 may be deployed between the gearbox 20 and the generator 22. The secondary gearbox 25 may be used to further increase the speed of the output shaft to the generator 22. It is to be understood that the wind turbine 10 may include any number of gearboxes and generators.

According to an exemplary embodiment of the present invention, the gearbox 20 includes a gear train 24 having a sun gear and a plurality of planet gears disposed inside a carrier 26. The carrier 26 is disposed inside an outer casing 28 and coupled to the input shaft 18. Typically, depending upon the requirements, the wind turbine 10 may deploy various types of gearboxes. It is to be understood that the present invention is not limited by the type of gearbox 20 used in the wind turbine 10. The carrier 26 is supported by a plurality of downwind gearbox bearings 30, and a plurality of upwind gearbox bearings 32. The casing 28 includes an outer surface 29 including a lower portion 31 and an upper portion 33.

The configuration of the wind turbine 10 is an exemplary embodiment and should not be in any way construed as limiting the scope of the invention. The secondary gearbox 25, and the generator 22 can be referred to as cantilevered components coupled to the gearbox 20. Cantilevered components are generally added downstream (away from the side of the rotor 16) of the gearbox 20. It is to be understood that other cantilevered component may be coupled to the gearbox 20 either directly or through the existing cantilevered components the secondary gearbox 25 and the generator 22. Also, even though a wind turbine is described herein, the exemplary support mechanisms discussed below is also suitable for other applications having gearbox systems.

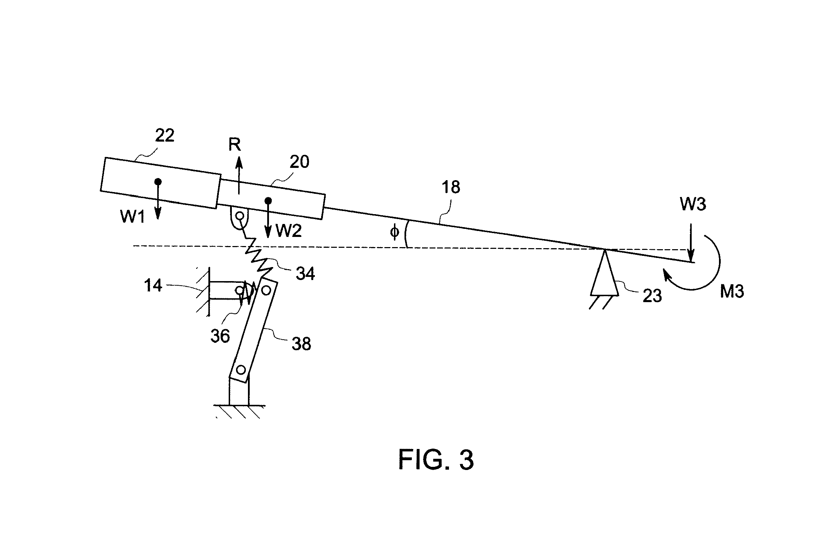

Load of the generator 22 and the gearbox 20 are main contributors to the gearbox loads acting on the gear train 24. Under varying wind load conditions, the gearbox loads may be dynamic in nature. This phenomenon is further explained in conjunction with FIG 3. The gearbox loads causes a vertical deflection of the gearbox 20. The deflection causes gear tooth misalignment, which results in reduced gearbox life. The downwind gearbox bearings 30 and the upwind gearbox bearings 32 are used to support the carrier 26. It should be noted herein that a vertical load acting on the downwind gearbox bearings 30 is indicative of the deflection of the gearbox 20 and the resulting gear tooth misalignment. The greater the vertical deflection of the gearbox 20, the greater is the vertical load on the downwind gearbox bearings 30. By keeping the downwind gearbox bearings 30 load within a specific limit, it can be ensured that the vertical deflection of gearbox 20 is within a corresponding specific limit, and therefore prevent the misalignment of gears or maintain the misalignment acceptable limits.

Embodiments of the present invention described herein below disclose mechanism to reduce deflection of gearbox 20 by supporting the gearbox 20 and reducing load on the downwind gearbox bearing such that the vertical load acting on the downwind gearbox bearings 30 is maintained within a specific limit. In the illustrated embodiment, the three link support mechanism 12 pushes the outer casing 28 upwards against the downward acting gearbox load and thus maintains the load acting on the downwind and upwind gearbox bearings 30, 32 within specific limits. In a specific exemplary embodiment, the combined load of the gearbox 20 and the generator 22 is 290000 Newton and it is desirable to keep the vertical load acting on the downwind gearbox bearings 30 within 158000 Newton so as to maintain the vertical deflection of the gearbox 20 within acceptable limits.

In an exemplary embodiment of the present invention, the three link support mechanism 12 includes three links viz. a first spring 34, a second spring 36, and a rotating link 38. In the illustrated embodiment, the first spring 34 and the second spring 36 are linear springs. The first spring 34 and the second spring 36 are capable of extension and compression in one dimension along the axis of the spring.

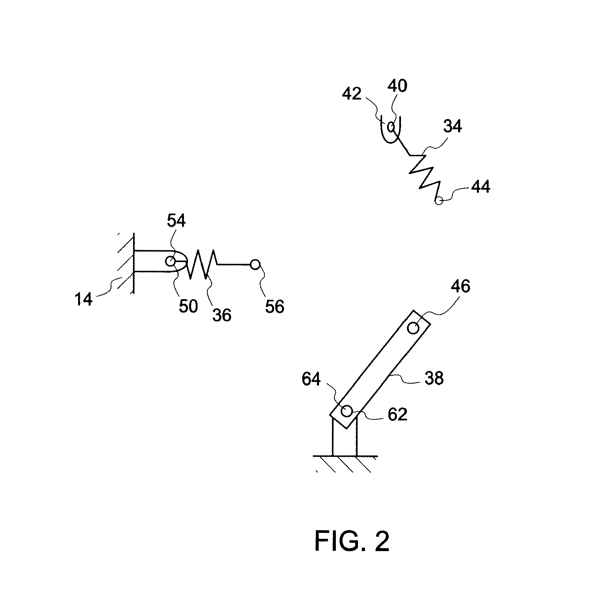

FIG 2 illustrates an exploded view of the three link support mechanism 12. In reference to both FIG 1 and 2, a first end 40 of the first spring 34 is coupled to a lower portion 31 of the gearbox outer casing 28 via a hinge joint 42. A second end 44 of the first spring 34 is coupled to a first end 46 of the rotating link 38 via a hinge joint 48. A first end 50 of the second spring 36 is coupled to the bed plate 14 via a hinge joint 54. A second end 56 of the second spring 36 is coupled to the first end 46 of the rotating link 38 via a hinge joint 60. A second end 62 of the rotating link 38 is coupled to the bedplate 14 via a hinge joint 64.

In an embodiment, the rotating link 38 is a steel rod. The first spring 34 and the second spring 36 may be, but not limited to, made of steel wire. The stiffness of the first spring 34 and second spring 36 and the length of the rotating link 38 may be chosen depending on the loads acting on the gearbox 20 and the magnitude of the support required from the three link support mechanism 12.

In an exemplary embodiment of the present invention, the first spring 34 of the three link support mechanism 12 is coupled to a lower portion 31 of the gearbox outer casing 28 and proximate to the down wind gearbox bearing 32 as illustrated in FIG 1.

FIG 3 is a diagrammatical representation of wind loads acting on the input shaft 18, the forces exerted by the three link support mechanism 12, the generator 22, and the gearbox 20 in accordance with the embodiment of FIG. 1. The wind loads having a force component W3 and a moment component M3 causes the input shaft 18 to rotate by an angle. The wind loads may have three dimensional force components and three dimensional moment components. The main bearings 23 act as a fulcrum for the rotation of input shaft 18. The generator 22 load represented as W1 and the gearbox 20 load represented as W2 act on the input shaft 18 in the direction of gravity. Loads W1 and W2 are constant in nature. However, varying wind load conditions causes variation in angle φ (phi), as illustrated in FIG 3, created due to rotation of the input shaft 18. The variation causes dynamic gearbox loads.

In the illustrated embodiment, the three link support mechanism 12 is located below the gearbox 20 and is coupled to the gearbox outer casing 28 at a location proximate to the downwind gearbox bearings 30. The three link support mechanism 12 supports the downwind and the upwind gearbox bearings 30, 32 against the load W1 of the generator 22 and the load W2 of the gearbox 20. It should be noted that any additional hardware, other than the generator 22, may be cantilevered to the gearbox 20. Such additional hardware will also contribute to the load on the gear train 24, and subsequently on the bearings 30, 32, in the gearbox 20. It is evident that the three link support mechanism 12 is designed to support the bearings 30, 32 against all such loads.

In the exemplary embodiment illustrated in FIG 3, the three link support mechanism 12 includes three links viz. the first spring 34, the second spring 36, and the rotating link 38. The three links 34, 36, 38 are coupled to each other in the manner described in conjunction with FIG 1 and 2. As discussed above, the first end 40 of the first spring 34 is coupled to the gearbox outer casing 28 at a location proximate to the downwind gearbox bearings 30. According to some embodiments, the second spring 36 is a pretensioned spring. In one embodiment, the second spring 36 may be provided with a 99.9% initial strain or is nearly fully extended to provide pretension. The pretensioned second spring 36 exerts a pulling force on the rotating link 38 causing the rotating link 38 to rotate counterclockwise about the hinge joint 64. The greater the pretension provided in the spring 36, the greater is the pulling force provided by the second spring 36. Generally, the pretension of the second spring 36 is chosen depending on the magnitudes of the dynamic loads expected during operation of the wind turbine. The greater the magnitude of the dynamic loads, the greater is the pretension required in the second spring 36. Counterclockwise rotation of the rotating link 38 causes the first spring 34 to compress and produce a reaction force R against the gearbox outer casing 28 in the direction illustrated in FIG 2. The greater the pulling force provided by the second spring 36, the greater is the tendency of the rotating link 38 to rotate counterclockwise, thereby causing increased compression in the first spring 34, resulting in an increased reaction force R.

During the operation of the wind turbine 10, there may be instances when excessive wind loads causes a change in angle φ as illustrated in Fig. 3. The change in the angle φ causes reaction load R to change in magnitude and direction. The loads push, the first spring 34 downwards, which causes the first spring 34 to exert a pushing force on the rotating link 38. The pushing force causes the rotating link 38 to rotate clockwise about the hinge joint 64. Clockwise rotation of the rotating link 38 causes an extension in length of second spring 36, thereby increasing the tension in the already pretensioned second spring 36. This results in an increased counter pulling force of second spring 36 which causes the rotating link 38 to rotate counter clockwise. The counter clockwise rotation of rotating link 38 results in further compression of first spring 34 enabling the first spring 34 to provide an increased reaction force R against the excessive loads W1 and W2. Thus the three link support mechanism 12 is self adjusting against the excessive loads that may appear from time to time in a dynamic system such as the gearbox 20 in the wind turbine 10, thereby off loading the gearbox bearings 30, 32 in a improved manner. The reaction force R reduces the load on the downwind gearbox bearings 30 and ensures that the load is maintained within predetermined limits.

In an specific exemplary embodiment, following numerical values are chosen for the three link support mechanism 12: Stiffness of the first spring 34: 200kN/mm; area of the second spring 36: 0.85 square millimeters; stiffness of the second spring 36: 1532 N/mm; length of rotating link 38 (steel rod): 192.05 mm; diameter of rotating link 38 (steel rod): 118.11 mm; distance between hinge joint 42 and hinge joint 64: 467.625 mm. In the specific embodiment, it is desirable that the load on the downwind gearbox bearings 30 is maintained within 158000 Newton to ensure that the vertical deflection of gearbox 20 and the resulting misalignment of the gears is within acceptable limits. When the three link support mechanism 12 with above numerical values is used in the configuration illustrated in FIG 1, the vertical load on the downwind gearbox bearing 30 was reduced from 289651 Newton to 100634 Newton. The amount of reduction is dependent on the wind loads acting on the rotor. In another exemplary embodiment, with different wind loads, when the three link support mechanism 12 with these numerical values is used in the configuration illustrated in FIG 1, the vertical load on the downwind gearbox bearing is reduced from 289651 Newton to 47830 Newton.

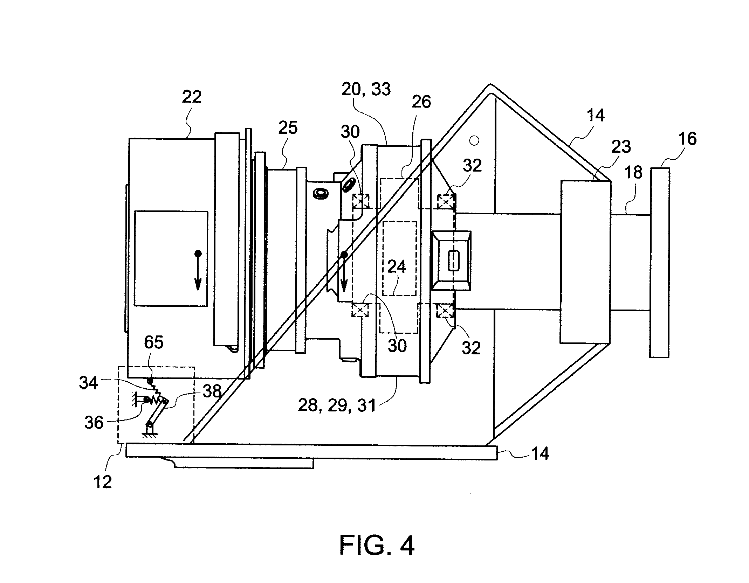

FIG 4 illustrates another exemplary embodiment of the present invention. As illustrated in the figure, the generator 22 is coupled to the bedplate 14 via the three link support mechanism 12. The first spring 34 of the three link support mechanism 12 is coupled to a lower side of the generator 22 via a hinge joint 65.

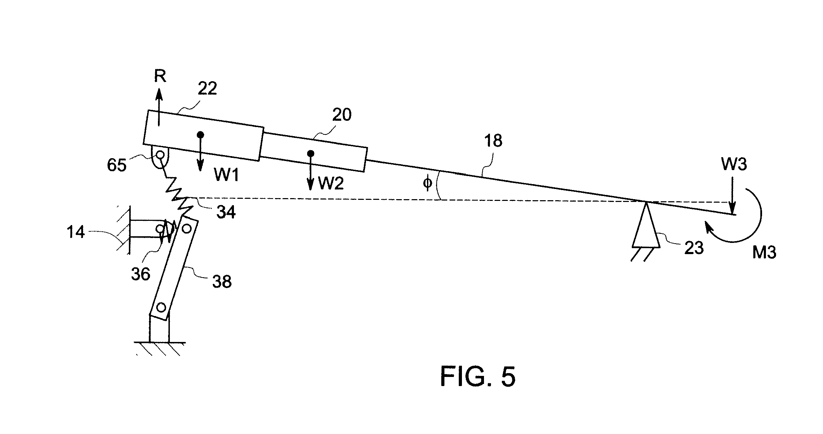

FIG 5 is a diagrammatical representation of wind loads acting on the input shaft 18, the forces exerted by the three link support mechanism 12, the generator 22, and the gearbox 20 in accordance with the embodiment of FIG. 3. The wind loads have a force component W3 and a moment component M3. The three link support mechanism 12 pushes the generator 22 upwards by providing a reaction force R in the direction illustrated in FIG 5. The reaction force R reduces the load on the downwind gearbox bearings 30 and ensures that the load is within predetermined limits. The magnitude of the reaction force provided by the three link support mechanism 12 in this embodiment may be different from the reaction force provided in the embodiment described in FIG 3. The difference in magnitude of the reaction force may be due to the difference in location of the three link support mechanism and/or the stiffness's of the three links. However, as discussed in the embodiment discussed in FIG 3, the three link support mechanism 12 of FIG 4 and 5 is self-adjusting against the excessive loads that may appear from time to time in a dynamic system such as the gearbox 20 in the wind turbine 10.

In certain other exemplary embodiments, the system may include two three link support mechanisms 12. In one embodiment, one three link support mechanism 12 may couple the gearbox 20 to the bedplate 14, whereas the other three link support mechanism 12 may couple the generator 22 to the bedplate 14.

In certain embodiments there may exist additional hardware, other than the generator 22, coupled to the gearbox. 24. For example, a secondary gearbox 25 may be placed between the gearbox 20 and the generator 22 to further increase the speed of the output shaft to the generator 22. The first spring 34 of the three link support mechanism 12 may be coupled to such additional hardware. It should be noted that the present invention is not limited by the aforementioned number of link mechanisms 12 or the positions of coupling of the first spring 34 with the gearbox 20. In an exemplary embodiment, the three link support mechanism 12 can be coupled to any cantilevered hardware downstream of the gearbox 20. Generally the position of the three link support mechanism 12 is determined based on the space available for placing the mechanism 12 and/or the stiffness of the links 34, 36, 38 in the three link support mechanism 12 and/or the magnitude of the dynamic loads acting on the gearbox 20.

The three link support mechanism 12 supports the gearbox and ensures that the downwind gearbox bearings 30 load does not exceed a predetermined limit, thereby ensuring that the deflection of the gearbox does not exceeds limits. The three link support mechanism 12 therefore prevents misalignment of gears in the gear train 24.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A rotary machine comprising:
   a rotor;
   a input shaft coupled to the rotor;
   a gearbox comprising a gear train coupled to the input shaft;
   at least one cantilevered component coupled to the gearbox and disposed downstream of the gearbox; and
   a three link support mechanism coupled to at least one of the gearbox, the at least one cantilevered component.
2. The rotary machine of clause 1, wherein the three link support mechanism is configured to prevent misalignment of gears in the gear train.
3. The rotary machine of any preceding clause, wherin the rotary machine is a wind turbine.
4. The rotary machine of any preceding clause, wherein the gearbox comprises an outer casing; wherein the three link support mechanism is coupled to the outer casing of the gearbox.
5. The rotary machine of any preceding clause, wherein the three link support mechanism is coupled to a lower portion of an outer surface of the outer casing of the gearbox.
6. The rotary machine of any preceding clause, wherein the gearbox further comprises a pair of downwind gearbox bearings and a pair of upwind gear bearings to support the gearbox, wherein the three link support mechanism is coupled to the gearbox at a location proximate to the downwind gearbox bearings.
7. The rotary machine of any preceding clause, wherein the gearbox further comprises a pair of downwind gearbox bearings and a pair of upwind gear bearings to support the gearbox, wherein the three link support mechanism is configured to maintain the load on the downwind gearbox bearings within a prespecified limit.
8. The rotary machine of any preceding clause, wherein gearbox comprises a primary gearbox.
9. The rotary machine of any preceding clause, wherein the at least one cantilevered component comprises a secondary gearbox.
10. The rotary machine of any preceding clause, wherein the secondary gearbox is coupled to a bedplate through the three link support mechanism.
11. The rotary machine of any preceding clause, wherein the at least one cantilevered component comprises a generator, wherein the gearbox is configured to transmit the rotary motion of the rotor to the generator to generate power.
12. The rotary machine of any preceding clause, wherein the generator is coupled to a bedplate through the three link support mechanism.
13. The rotary machine of any preceding clause, wherein the three link support mechanism comprises a first spring, a second spring, and a rotating link coupled to each other.
14. The rotary machine of any preceding clause, wherein the first spring comprises a first end coupled to the gearbox or the at least one cantilevered component and a second end coupled to the rotating link.
15. The rotary machine of any preceding clause, wherein the second spring comprises a first end coupled to a bedplate and a second end coupled to the rotating link.
16. The rotary machine of any preceding clause, wherein the rotating link comprises a first end coupled to the first spring and a second end coupled to a bedplate.

## Claims

1. A rotary machine (10) comprising:
a rotor (16);
a input shaft (18) coupled to the rotor (16);
a gearbox (20) comprising a gear train (24) coupled to the input shaft (18);
at least one cantilevered component coupled to the gearbox (20) and disposed downstream of the gearbox (20); and
a three link support mechanism (12) coupled to at least one of the gearbox (20), the at least one cantilevered component.

2. The rotary machine (10) of claim 1, wherein the gearbox (20) comprises an outer casing (28); wherein the three link support mechanism (12) is coupled to the outer casing (28) of the gearbox (20).

3. The rotary machine (10) of any preceding claim, wherein gearbox (20) comprises a primary gearbox.

4. The rotary machine (10) of any preceding claim, wherein the at least one cantilevered component comprises a secondary gearbox (25).

5. The rotary machine (10) of claim 4, wherein the secondary gearbox (25) is coupled to a bedplate (14) through the three link support mechanism (12).

6. The rotary machine (10) of any preceding claim, wherein the at least one cantilevered component comprises a generator (22), wherein the gearbox (20) is configured to transmit the rotary motion of the rotor (16) to the generator (22) to generate power.

7. The rotary machine (10) of any preceding claim, wherein the three link upport mechanism (12) comprises a first spring (34), a second spring (36), and a rotating link (38) coupled to each other.

8. The rotary machine (10) of claim 7, wherein the first spring (34) comprises a first end (40) coupled to the gearbox (20) or the at least one cantilevered component and a second end (44) coupled to the rotating link (38).

9. The rotary machine (10) of claim 7 or claim 8, wherein the second spring (36) comprises a first end (50) coupled to a bedplate (14) and a second end (56) coupled to the rotating link (38).

10. The rotary machine (10) of any of claims 7 to 9, wherein the rotating link (38) comprises a first end (46) coupled to the first spring (34) and a second end (64) coupled to a bedplate (14).
